# EUROPÄISCHE PATENTSCHRIFT

(11) **EP 0 790 427 B1**
(45) Veröffentlichungstag und Bekanntmachung des Hinweises auf die Patenterteilung: **01.09.1999**
(21) Anmeldenummer: 97102163.9
(22) Anmeldetag: 12.02.1997
(51) Int. Cl.: F16D 25/12

(54) **Betätigungszylinder und Verfahren für dessen Montage**
Actuating cylinder and method for its assembly
Cylindre de commande et procédé pour son montage

(30) Priorität: 13.02.1996 DE 19605220
(43) Veröffentlichungstag der Anmeldung: 20.08.1997
(73) Patentinhaber: FTE automotive GmbH, 96106 Ebern (DE)
(72) Erfinder: Keller, Christoph, Dipl.-Ing. (FH), 97711 Massbach (DE); Meyer, Gerhard, Dipl.-Ing. (FH), 91611 Lehrberg (DE); Stretz, Siegbert, 97500 Ebelsbach (DE)
(74) Vertreter: Oppermann, Ewald, Dipl.-Ing.

(56) Entgegenhaltungen:
- WO-A-88/08801
- DE-A- 2 651 398
- DE-A- 3 816 610
- GB-A- 2 265 963
- US-A- 2 442 306
- US-A- 2 736 294

## Beschreibung

Die Erfindung bezieht sich auf einen Betätigungszylinder gemäß dem Oberbegriff des Patentanspruchs 1 und auf ein Verfahren für dessen Montage gemäß dem Patentanspruch 11. Insbesondere bezieht sich die Erfindung auf einen Betätigungszylinder für eine hydraulische Kupplungsbetätigung in einem Kraftfahrzeug, wie sie massenweise in der Serienfertigung verbaut werden.

Aus der DE 38 16 608 A1 ist ein Betätigungszylinder bekannt, der ein Gehäuse aufweist, in dem ein Kolben angeordnet ist, der über ein Führungsteil geführt und mittels einer Kolbenstange verschoben werden kann. Dieser Betätigungszylinder dient in einer hydraulischen Kupplungsbetätigung als Geberzylinder, der mittels der Kolbenstange an das Kupplungspedal des Kraftfahrzeugs angeschlossen und über eine Druckleitung mit einem Nehmerzylinder hydraulisch verbunden ist, so daß der bei Niedertreten des Kupplungspedals durch Verschieben des Kolbens in der Druckkammer des Betätigungszylinders erzeugte Druck über die Flüssigkeitssäule in der Druckleitung auf den Nehmerzylinder übertragbar ist. Im Ergebnis wird das Ausrücklager der Kupplung des Kraftfahrzeugs von dem Nehmerzylinder mit einer Betätigungskraft beaufschlagt, um über einen Ausrückmechanismus die Kupplungsdruckplatte von der Kupplungsmitnehmerscheibe und somit den Verbrennungsmotor vom Getriebe des Kraftfahrzeugs zu trennen.

Bei diesem Stand der Technik besteht das druckkammerseitige Ende des Kolbens des Betätigungszylinders, welches auf der von der Druckkammer abgewandten Seite eine Aufnahme für die Kolbenstange ausbildet, aus Kunststoff. Im Betrieb des Betätigungszylinders muß verhindert werden, daß der Kolben durch Niedertreten des Kupplungspedals auf den Gehäuseboden des Betätigungszylinders auffahren kann, da die überschüssigen Betätigungskräfte, auch Mißbrauchskräfte genannt, eine überhöhte Druckbelastung zwischen Kolben und Gehäuseboden einerseits sowie Kolben und Kolbenstange andererseits zur Folge haben könnten, die zu einer Beschädigung des Kolbens führen kann. Um dies zu verhindern ist das pedalseitige Ende der Kolbenstange mit einem Gewinde versehen, auf das bei Einbau des Betätigungszylinders in das Kraftfahrzeug eine Mutter als Konterteil aufgeschraubt wird, die mit einem ortsfesten Stellelement zusammenwirkt, um den Arbeitshub des Kolbens zu begrenzen.

Obgleich bei diesem Stand der Technik über das Führungsteil eine glatte Führung des Kolbens im Gehäuse des Betätigungszylinders gewährleistet wird, besteht hier ein Nachteil darin, daß bei Einbau des Betätigungszylinders in das Kraftfahrzeug die Einstellung des Arbeitshubs des Kolbens zusätzliche Arbeitsschritte erfordert, die aufgrund der Streuung der Fertigungstoleranzen am Betätigungszylinder und am Kupplungspedal bzw. Pedalbock auch noch relativ aufwendig sind.

Das gleiche Problem besteht bei dem aus der gattungsbildenden DE 38 16 610 A1 bekannten Betätigungszylinder, der sich vom Stand der Technik gemäß der DE 38 16 608 A1 dadurch unterscheidet, daß das Führungsteil mit dem Gehäuse des Betätigungszylinders mittels eines Gewindeabschnitts lösbar verbunden ist.

Ferner zeigt die DE 31 49 628 A1 einen Betätigungszylinder, dessen Kolben an seinem druckkammerseitigen Ende mit einem Zentralventil versehen ist. Auch dieser Kolben darf nicht auf den Gehäuseboden des Betätigungszylinders auffahren, da dies eine Beschädigung des Zentralventils zur Folge haben könnte. Gemäß diesem Stand der Technik ist das pedalseitige Ende der Kolbenstange mit einem Kolbenstangenkopf versehen, der ein Anschlußauge aufweist, über das die Kolbenstange mit dem Kupplungspedal wirkverbunden ist. Eine Begrenzung des Arbeitshubs des Kolbens erfolgt hier zwischen Kupplungspedal und Pedalbock, die dazu bei komplett vormontiertem Betätigungszylinder beide eng toleriert werden müssen, was mit entsprechend hohen Herstellungskosten verbunden ist.

Weiterhin ist es beispielsweise aus der DE 37 38 512 A1 bekannt, den Kolben eines Nehmerzylinders derart auszubilden, daß er ohne Beschädigung auf den Gehäuseboden des Nehmerzylinders auffahren kann. Bei diesem Stand der Technik bestehen jedoch Probleme dahingehend, daß der Kolben aus geeignet festen und dementsprechend teuren Materialien hergestellt und/oder entsprechend groß dimensioniert werden muß, um eine im Hinblick auf die auftretenden Mißbrauchskräfte ausreichende Bauteilfestigkeit aufzuweisen.

Ferner offenbart die DE 35 25 029 A1 eine Kolben-Zylinder-Anordnung, bei der eine Anschlaganordnung zur Hubbegrenzung vorhanden ist, die einen außen am Zylinder angebrachten Festanschlag und einen mit diesem zusammenarbeitenden Gegenanschlag aufweist. Der Gegenanschlag besteht aus einem an der Kolbenstange ausgebildeten Gewindeabschnitt, auf den ein Gewindering aufgeschraubt ist, der mittels einer Sicherung in Form einer Kontermutter oder einer Feststellschraube, die in einer radial in den Gewindering eingebrachten Gewindebohrung sitzt, in axialer Richtung der Kolbenstange lösbar fixiert ist. Dieser Stand der Technik weist den Nachteil auf, daß die Ausbildung des Gegenanschlags und dessen Montage an der Kolbenstange relativ aufwendig sind.

Die US-A-2 736 294 offenbart einen Aufbau, bei dem der Arbeitshub des Kolbens einer Kolben-Zylinder-Anordnung über die Relativlage eines Kolbenstangenkopfes bezüglich einer einstückig mit dem Kolben ausgebildeten Kolbenstange festgelegt ist. Der Kolbenstangenkopf ist hier mit der Kolbenstange lösbar mittels einer zusätzlichen Gewindestange verbunden.

Schließlich hat der in der US-A-2 442 306 offenbarte Betätigungszylinder einen zweiseitig beaufschlagbaren Kolben, der über eine Kolbenstange an einen Kolbenstangenkopf angeschlossen ist. Der Kolbenstangenkopf ist mittels einer Gewindeverbindung mit der Kolbenstange verbunden. Gemäß diesem Stand der Technik wird bei Druckbeaufschlagung des Kolbens über einen Anschluß der Hub des Kolbens auf der einen Seite durch Anschlag einer Scheibe an dem Zylindergehäuse begrenzt, während der Hub bei Druckbeaufschlagung des Kolbens über einen anderen Anschluß auf der anderen Seite zwischen dem Kolbenstangenkopf und einem in axialer Richtung des Zylinders einstellbaren Anschlag begrenzt wird.

Gegenüber dem oben beschriebenen Stand der Technik liegt der Erfindung daher die Aufgabe zugrunde, ausgehend vom Stand der Technik gemäß der DE 38 16 610 A1 einen einfach aufgebauten Betätigungszylinder zu schaffen, der sich mittels eines geeigneten Verfahrens wirtschaftlich günstig montieren läßt.

Diese Aufgabe wird durch die im Patentanspruch 1 angegebenen Merkmale bzw. die Merkmale des Patentanspruchs 11 gelöst. Vorteilhafte bzw. zweckmäßige Weiterbildungen der Erfindung sind Gegenstand der Patentansprüche 2 bis 10 und der Patentansprüche 12 bis 17.

Erfindungsgemäß ist an dem Druckbolzen der Kolbeneinheit des Betätigungszylinders unmittelbar, d.h. ohne Verwendung weiterer Bauteile wie Kontermuttern, Madenschrauben etc., ein Druckbolzenkopf unter plastischer Verformung unlösbar angebracht, über dessen Relativlage bezüglich des Druckbolzens der Arbeitshub der Kolbeneinheit festgelegt ist. Somit sind keine zusätzlichen Justier- bzw. Begrenzungselemente am Betätigungszylinder, Kupplungspedal und/oder Pedalbock notwendig, um den Arbeitshub der Kolbeneinheit einzustellen, was eine kostengünstige Montage des Betätigungszylinders in der Serienfertigung ermöglicht. Darüber hinaus hat diese Ausbildung des Betätigungszylinders den Vorteil, daß sich der Hub des Betätigungszylinders im Betrieb nicht unbeabsichtigt verändern kann.

Gemäß dem erfindungsgemäßen Verfahren zur Montage des Betätigungszylinders werden die vormontierte Kolbeneinheit sowie die Führungshülse ohne Druckbolzenkopf in das Gehäuse eingeschoben und die Führungshülse an dem Gehäuse befestigt, sodann wird die Kolbeneinheit bis auf Anschlag in Richtung der Führungshülse verschoben und der Druckbolzen bezüglich des Gehäuses (vorübergehend) fixiert, bis im Folgeschritt der Druckbolzenkopf auf den Druckbolzen bei gleichzeitigem Einstellen des Arbeitshubs der Kolbeneinheit aufgeschoben und schließlich der Druckbolzenkopf unter plastischer Verformung unlösbar an dem Druckbolzen befestigt wird.

Im Ergebnis kann der Arbeitshub der Kolbeneinheit in vorteilhafter Weise bereits bei Montage des Betätigungszylinders genau eingestellt werden, wodurch nachträgliche Einstellarbeiten bei beispielsweise einem Einbau des Betätigungszylinders in einem Kraftfahrzeug entfallen. Die Toleranzstreuung des Druckbolzenanschlußmaßes ist dabei nur von dem Montagevorgang bzw. dem Montagewerkzeug abhängig, wobei Fertigungstoleranzen der Einzelteile beim Montagevorgang ausgeglichen werden. Dies ermöglicht eine relativ weite Tolerierung des vornehmlich aus Blech gefertigten Pedalbocks und des Pedals, was insbesondere in der Serienfertigung Kostenvorteile mit sich bringt.

Gemäß dem Patentanspruch 2 hat der Druckbolzenkopf eine Öffnung zur Aufnahme des von der Kolbeneinheit abgewandten Endes des Druckbolzens, wobei der Arbeitshub der Kolbeneinheit über die Einbettungstiefe des Druckbolzens in der Öffnung bei Montage des Betätigungszylinders variabel einstellbar ist. Dies ermöglicht die Erstellung eines Baukastensystems bei Reduzierung der Teileanzahl, da verschiedene Arbeitshübe der Kolbeneinheit mit den gleichen Teilen realisiert werden können.

Der Patentanspruch 3 sieht vor, den Druckbolzenkopf aus einem Kunststoff herzustellen, während der Druckbolzen aus Metall besteht und an seinem in der Öffnung des Druckbolzenkopfes aufgenommenen Ende mit einem profilierten Abschnitt versehen ist, der während der Montage des Betätigungszylinders in der Öffnung des Druckbolzenkopfes mittels Warmeinbetten befestigt wird, wie im Patentanspruch 15 angegeben ist. Neben der Tatsache, daß der Druckbolzenkopf fertigungstechnisch günstig aus Kunststoff herstellbar ist, da keine Einlegeteile, wie Bolzen, Formteile etc., in die Kunststoffspritzgießform eingelegt werden müssen, hat die vorgeschlagene Befestigungsart noch den Vorteil, daß der Druckbolzenkopf am Druckbolzen einfach in einem Arbeitsgang festgelegt werden kann.

Gemäß dem Patentanspruch 4 weist der profilierte Abschnitt des Druckbolzens ein Rändelprofil auf, welches sich fertigungstechnisch günstig am Druckbolzen anbringen läßt.

Weiterhin hat der Druckbolzenkopf an seinem von der Kolbeneinheit abgewandten Ende gemäß dem Patentanspruch 5 ein Befestigungsauge, welches der Einleitung von Kräften zur Betätigung des Betätigungszylinders dient. Eine Anbindung des Betätigungszylinders an das Kupplungspedal bzw. ein Pedalgestänge kann somit vorteilhaft einfach mittels eines Steckbolzens erfolgen.

Eine Alternative dazu ist im Patentanspruch 6 angegeben. Demgemäß ist der Druckbolzenkopf an seinem von der Kolbeneinheit abgewandten Ende im wesentlichen kugelförmig, um mit einer betätigungsseitig angeordneten, im wesentlichen komplementär geformten Aufnahme eine Schnappverbindung auszubilden, welche der Einleitung von Kräften zur Betätigung des Betätigungszylinders dient. Diese Ausbildung des Druckbolzenkopfes erleichtert die Montage des Betätigungszylinders zusätzlich.

Der Patentanspruch 7 gibt eine bevorzugte Ausgestaltung der Arbeitshubbegrenzung für die Kolbeneinheit an. Demgemäß weist die Führungshülse auf ihrer von der Kolbeneinheit abgewandten Seite eine ringförmige Anschlagfläche auf, die mit einer Ringfläche des Druckbolzenkopfes, die auf der der Kolbeneinheit zugewandten Seite des Druckbolzenkopfes ausgebildet ist, zur Anlage bringbar ist, um den Arbeitshub der Kolbeneinheit zu begrenzen. Zwischen dieser Anschlagfläche der Führungshülse und der genannten Ringfläche des Druckbolzenkopfes wird gemäß dem Patentanspruch 13 der Arbeitshub der Kolbeneinheit bereits bei Montage des Betätigungszylinders eingestellt.

Da der Arbeitshub am Betätigungszylinder selbst begrenzt wird entfällt in vorteilhafter Weise der Maß- und Toleranzbezug zwischen Betätigungszylinder und Kupplungspedal bzw. Pedalbock. Dies hat zur Folge, daß Maßketten zwangsläufig vermieden werden, wodurch die einzelnen Bauteile im Vergleich zum Stand der Technik bei verringertem Fertigungsaufwand nur weniger eng toleriert werden müssen. Auch wird gewährleistet, daß die Mißbrauchskräfte über die Führungshülse in das Gehäuse eingeleitet werden, so daß die Kolbeneinheit nicht durch Mißbrauchskräfte zusätzlich belastet wird und lediglich im Hinblick auf ihre hydraulische Funktion dimensioniert werden muß.

Gemäß dem Patentanspruch 8 hat die Führungshülse einen inneren Ringabschnitt, der die Kolbeneinheit führt und an dem die Anschlagfläche ausgebildet ist, sowie einen äußeren Ringabschnitt, der mit dem Gehäuse verbunden ist, wobei der innere Ringabschnitt mit dem äußeren Ringabschnitt über einen Steg und eine Mehrzahl von Längsrippen verbunden ist. Die derartig ausgebildete Führungshülse baut in vorteilhafter Weise sehr kurz.

Das Gehäuse und die Führungshülse bestehen gemäß dem Patentanspruch 9 vorteilhaft aus einem ultraschallverschweißbaren Kunststoff und werden gemäß dem Patentanspruch 16 durch Ultraschallverschweißen bei Montage des Betätigungszylinders aneinander befestigt. Diese Befestigungsart erfordert nur einen geringen vorrichtungstechnischen Aufwand.

Eine andere Befestigungsart sieht der Patentanspruch 10 vor, gemäß dem die Führungshülse mit dem Gehäuse mittels einer Schnappverbindung verbunden ist, wobei gemäß dem Patentanspruch 17 die Führungshülse bei Montage des Betätigungszylinders mit dem Gehäuse verrastet wird. Bei dieser Befestigungsart sind die Montageschritte Einschieben der Führungshülse in das Gehäuse und Befestigen der Führungshülse an dem Gehäuse in vorteilhafter Weise zusammengefaßt.

Die Erfindung wird nachstehend anhand eines bevorzugten Ausführungsbeispiels unter Bezugnahme auf die Zeichnung näher erläutert. Dabei zeigen:
Die Fig. 1 eine Schnittansicht eines bevorzugten Ausführungsbeispiels eines Betätigungszylinders,
die Fig. 2 eine vergrößerte Schnittansicht der Führungshülse des Betätigungszylinders gemäß Fig. 1 und
die Fig. 3 eine vergrößerte Schnittansicht des an den Druckbolzen des Betätigungszylinders gemäß Fig. 1 angeschlossenen Druckbolzenkopfes.

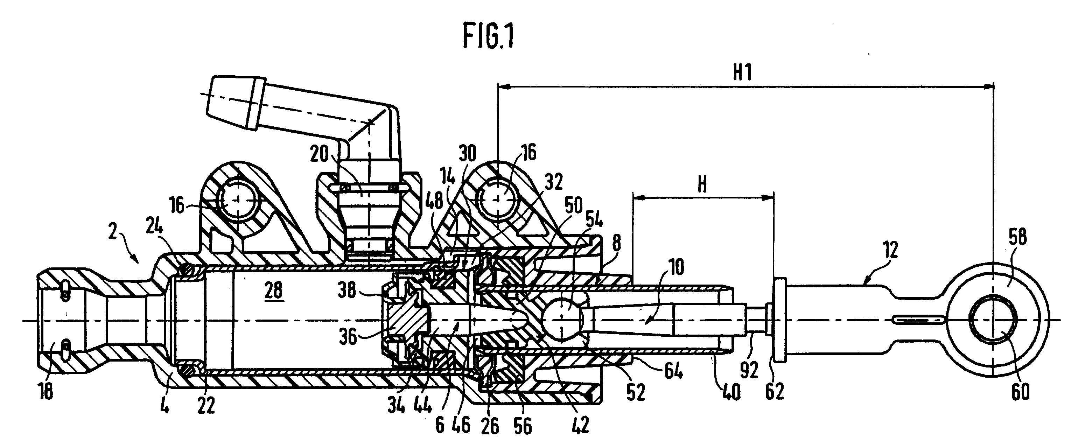

Die Fig. 1 zeigt das bevorzugte Ausführungsbeispiel eines Betätigungszylinders 2 im unbetätigten Zustand. Gemäß Fig. 1 hat der Betätigungszylinder 2 ein Gehäuse 4, in dem eine Kolbeneinheit 6 axial verschiebbar aufgenommen ist. Die Kolbeneinheit 6 ist über eine Führungshülse 8 geführt und kann mittels eines Druckbolzens 10 im Gehäuse 4 verschoben werden. Die Führungshülse 8 ist fest mit dem Gehäuse 4 verbunden und bildet im dargestellten Ausführungsbeispiel einen Anschlag für einen am Druckbolzen 10 angebrachten Druckbolzenkopf 12 aus, um den Arbeitshub H der Kolbeneinheit 6 im Gehäuse 4 zu begrenzen.

Das Gehäuse 4 besteht vorzugsweise aus Kunststoff und weist eine gestufte Gehäusebohrung 14 auf. Ferner ist das Gehäuse 4 mit zwei axial zueinander und radial zur Gehäusebohrung 14 beabstandeten Befestigungsaugen 16 versehen, mittels deren der Betätigungszylinder 2 im Kraftfahrzeug befestigt werden kann. Das Gehäuse 4 hat weiterhin an seinem dem offenen Ende der Gehäusebohrung 14 gegenüberliegenden Ende einen sich koaxial zur Gehäusebohrung 14 erstreckenden Anschluß 18, über den der Betätigungszylinder 2 unter Zwischenfügung einer Druckleitung mit einem Nehmerzylinder (nicht dargestellt) hydraulisch verbunden werden kann. Schließlich weist das Gehäuse 4 zwischen den Befestigungsaugen 16 einen weiteren, sich radial von der Gehäusebohrung 14 weg erstreckenden Anschluß 20 auf, über den der Betätigungszylinder 2 an einen Ausgleichsbehälter (nicht dargestellt) angeschlossen werden kann.

In die Gehäusebohrung 14 ist eine vorzugsweise metallische Laufbuchse 22 eingepaßt, deren eines Ende sich bis zum Anschluß 18 für den Nehmerzylinder erstreckt und am Umfang eine Dichtung 24 trägt, die an der Innenwandung der Gehäusebohrung 14 anliegt. Das andere Ende der Laufbuchse 22 liegt bündig an der radial äußeren ringförmigen Stirnfläche einer Stützscheibe 26 aus Kunststoff an, die von der fest mit dem Gehäuse 4 verbundenen Führungshülse 8 in axialer und radialer Richtung gehalten wird. Die Laufbuchse 22 bildet die Zylinderwandung des Betätigungszylinders 2 aus, entlang der die Kolbeneinheit 6 verschoben werden kann, und begrenzt somit in radialer Richtung den Druckraum 28 des Betätigungszylinders 2. Ferner ist an dem der Stützscheibe 26 zugewandten Ende der Laufbuchse 22 ein Druckausgleichs- und Nachlaufsystem 30 ausgebildet, welches eine Öffnung 32 aufweist, über die der Druckraum 28 in an sich bekannter Weise mit dem Anschluß 20 für den Ausgleichsbehälter hydraulisch verbunden ist, wenn der Betätigungszylinder 2 nicht betätigt wird, d.h. wenn sich die Kolbeneinheit 6 in der in Fig. 1 dargestellten Lage auf Anschlag an der dem Druckraum 28 zugewandten, radial inneren ringförmigen Stirnfläche der Stützscheibe 26 befindet.

Die Kolbeneinheit 6 besteht ausgehend von ihrer den Druckraum 28 in axialer Richtung begrenzenden hydraulischen Wirkfläche aus einem Kolbenkopf 34 mit einem daran angebrachten Zentralventil, welches ein Ventilteil 36 und eine Halterung 38 für das Ventilteil 36 aufweist, und einem vorzugsweise metallischen Schaftteil 40, welches auf dem von dem Druckraum 28 abgewandten Ende des Kolbenkopfes 34 einen im Durchmesser verjüngten zylindrischen Ansatz 42 des Kolbenkopfes 34 an dessen Umfang fest umschließt. Das Schaftteil 40 ist so weit auf den zylindrischen Ansatz 42 des Kolbenkopfes 34 aufgeschoben, daß es mit seiner druckraumseitigen Stirnfläche bündig an dem Kolbenkopf 34 anliegt.

Der Kolbenkopf 34 besteht vorzugsweise aus Kunststoff und ist mit einem Sackloch 44 und einer Querbohrung 46 versehen, über die der Druckraum 28 mit dem Druckausgleichs- und Nachlaufsystem 30 hydraulisch verbunden ist, wenn das Ventilteil 36 von seinem Sitz abhebt. Zwischen dem Zentralventil und der Querbohrung 46 trägt der Kolbenkopf 34 in einer an seinem Umfang ausgebildeten Nut ein Dichtelement 48, das bei Betätigen des Betätigungszylinders 2 den Druckraum 28 von dem Druckausgleichs- und Nachlaufsystem 30 hydraulisch trennt. Auch der zylindrische Ansatz 42 des Kolbenkopfes 34 ist mit einer Nut versehen, in der eine Dichtung 50 eingesetzt ist, die eng an der Innenwandung des Schaftteils 40 anliegt. An dem von dem Druckraum 28 abgewandten Ende des zylindrischen Ansatzes 42 sind an dem Kolbenkopf 34 zwei Kugelschnapphaken 52 ausgebildet, die ein am Druckbolzen 10 angeformtes Kugelteil 54 aufnehmen, um den Druckbolzen 10 bezüglich der Kolbeneinheit 6 in axialer Richtung zu fixieren.

Im Ergebnis bilden der Kolbenkopf 34, das Ventilteil 36, die Halterung 38, das Schaftteil 40, der zylindrische Ansatz 42 des Kolbenkopfes 34, das Dichtelement 48, die Dichtung 50 sowie die Kugelschnapphaken 52 die Kolbeneinheit 6 aus, die mittels des Druckbolzens 10 im Gehäuse 4 als Einheit verschoben werden kann. Die Kolbeneinheit 6 wird dabei mit dem Schaftteil 40 in der Führungshülse 8 geführt und der Betätigungszylinder 2 mittels eines in der Führungshülse 8 eingesetzten Dichtelements 56, welches mit der Außenumfangsfläche des Schaftteils 40 zusammenwirkt, am offenen Ende der Gehäusebohrung 14 gegenüber der Umgebung abgedichtet.

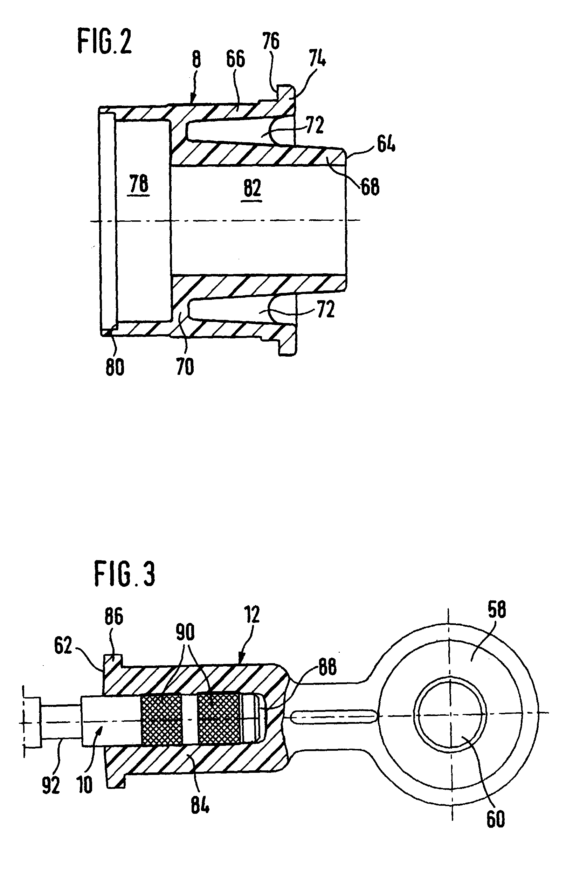

Am von dem Druckraum 28 abgewandten Ende des Druckbolzens 10 ist der Druckbolzenkopf 12 am Druckbolzen 10 unmittelbar und unlösbar befestigt, wie unter Bezugnahme auf die Fig. 3 noch näher erläutert wird. Der Druckbolzenkopf 12 besteht vorzugsweise aus Kunststoff und weist an seinem vom Druckraum 28 abgewandten Ende ein planparallel abgeflachtes Befestigungsauge 58 mit einer rechtwinklig zur Längsachse des Druckbolzenkopfes 12 eingebrachten Durchgangsbohrung 60 auf, über das der Betätigungszylinder 2 unter Zuhilfenahme eines Steckbolzens (nicht dargestellt) an das Kupplungspedal bzw. ein Kupplungsgestänge des Kraftfahrzeugs angeschlossen werden kann. Anstelle des Befestigungsauges 58 kann auch ein kugelförmiges Ende (nicht dargestellt) am Druckbolzenkopf 12 vorgesehen werden, das zusammen mit einer pedalseitig angeordneten, im wesentlichen komplementär geformten Aufnahme eine Schnappverbindung aus Kunststoff ausbildet, um die Montage des Betätigungszylinders 2 am Einsatzort zusätzlich zu erleichtern.

Der Druckbolzenkopf 12 hat stirnseitig eine dem Druckraum 28 zugewandte Ringfläche 62, deren Durchmesser derart gewählt ist, das die Ringfläche 62 bei Niederdrücken des Druckbolzenkopfes 12 in Richtung auf den Druckraum 28 an einer ringförmigen Anschlagfläche 64 der Führungshülse 8 anschlägt, die am von dem Druckraum 28 abgewandten Ende der Führungshülse 8 ausgebildet ist, um den Arbeitshub H der Kolbeneinheit 6 in Betätigungsrichtung des Betätigungszylinders 2, d.h. nach links in Fig. 1 zu begrenzen.

In Fig. 2 ist die Führungshülse 8 vergrößert dargestellt. Die Führungshülse 8 besteht vorzugsweise aus Kunststoff und ist rotationssymmetrisch ausgebildet. Die Führungshülse 8 weist einen äußeren Ringabschnitt 66 auf, der einen inneren Ringabschnitt 68 konzentrisch umgibt und mit diesem über einen ringförmigen Steg 70 sowie eine Mehrzahl von Längsrippen 72 verbunden ist, die sich in radialer Richtung vom inneren Ringabschnitt 68 weg zum äußeren Ringabschnitt 66 hin erstrecken und zur Erhöhung der Bauteilfestigkeit dienen.

Der äußere Ringabschnitt 66 ist an seinem in Fig. 1 vom Druckraum 28 abgewandten Ende mit einem Bund 74 versehen, der im eingebauten Zustand der Führungshülse 8 mit seiner dem Druckraum 28 zugewandten ringförmigen Stirnfläche 76 bündig am Gehäuse 4 anliegt. Der Außendurchmesser des äußeren Ringabschnitts 66 ist derart gewählt, daß die Führungshülse 8 im wesentlichen spielfrei in die Gehäusebohrung 14 des Gehäuses 4 paßt. Von ihrer dem Druckraum 28 zugewandten Seite ist der äußere Ringabschnitt 66 mit einer im Innendurchmesser gestuften Ausnehmung 78 versehen, die eine ringförmige Schulter 80 ausbildet, an der sich im eingebauten Zustand der Führungshülse 8 die Stützscheibe 26 abstützt, um die Laufbuchse 22 in axialer Richtung in der Gehäusebohrung 14 zu fixieren. Der größere Innendurchmesser der Ausnehmung 78 ist nur etwas größer als der Außendurchmesser der Stützscheibe 26 gewählt, so daß diese im wesentlichen spielfrei in dem von dem Druckraum 28 kommend vorderen Abschnitt der Ausnehmung 78 aufgenommen werden kann. Der von dem Druckraum 28 kommend hintere Abschnitt der Ausnehmung 78, der einen kleineren Innendurchmesser aufweist als der vordere Abschnitt der Ausnehmung 78, endet an dem Steg 70, der bündig mit der dem Druckraum 28 zugewandten Stirnfläche des inneren Ringabschnitt 68 abschließt, und bildet eine Aufnahme für das Dichtelement 56.

Der inneren Ringabschnitt 68 der Führungshülse 8 ist mit einer zentrischen Durchgangsbohrung 82 versehen. Der Innendurchmesser der Durchgangsbohrung 82 sowie die Länge des inneren Ringabschnitts 68 sind derart gewählt, daß die Innenwandung der Durchgangsbohrung 82 das Schaftteil 40 der Kolbeneinheit 6 führen kann, ohne diesem bei Bewegung der Kolbeneinheit 6 einen zu großen Reibwiderstand entgegenzusetzen, so daß die zur Verschiebung der Kolbeneinheit 6 benötigten Betätigungskräfte nicht zu hoch sind. Der innere Ringabschnitt 68 der Führungshülse 8 muß dabei nicht notwendiger Weise in axialer Richtung aus dem äußeren Ringabschnitt 66 der Führungshülse 8 herausragen. Das vom Druckraum 28 abgewandte Ende des inneren Ringabschnitts 68 bildet schließlich die bereits erwähnte Anschlagfläche 64 für den Druckbolzenkopf 12 aus.

In dem in Fig. 1 dargestellten Ausführungsbeispiel bestehen das Gehäuse 4 sowie die Führungshülse 8 vorzugsweise aus Kunststoffen, die ultraschallverschweißbar sind, so daß die Führungshülse 8 in der Gehäusebohrung 14 des Gehäuses 4 mittels eines Ultraschallschweißverfahrens unverrückbar befestigt werden kann, nachdem die Führungshülse 8 soweit in die Gehäusebohrung 14 hineingeschoben wurde, daß die Stirnfläche 76 des Bundes 74 bündig an der von dem Druckraum 28 abgewandten Stirnfläche des Gehäuses 4 anliegt. Bei dieser Befestigungsart werden die Außenumfangsfläche des äußeren Ringabschnitts 66 und die korrespondierende Innenumfangsfläche der Gehäusebohrung 14 durch Einschallen von Ultraschallwellen oberflächlich aufgeschmolzen, so daß zwischen der Führungshülse 8 und dem Gehäuse 4 eine stoffschlüssige Verbindung entsteht.

Es ist aber auch möglich, die Führungshülse als reines Einlegeteil auszubilden, wobei anstelle des Bundes des äußeren Ringabschnitts der Führungshülse ein separates, aus einem ultraschallverschweißbaren Kunststoff bestehendes Ringteil vorgesehen ist, welches mit der von dem Druckraum abgewandten Stirnfläche des Gehäuses sowie einer von dem Druckraum abgewandten Stirnfläche des äußeren Ringabschnitts der Führungshülse ultraschallverschweißt wird, nachdem die Führungshülse soweit in die Gehäusebohrung eingeschoben wurde, daß die angesprochenen Stirnflächen des Gehäuses und des äußeren Ringabschnitts bündig miteinander abschließen.

Die Führungshülse kann prinzipiell auch mittels einer Schnappverbindung an dem Gehäuse befestigt werden. Bei dieser Befestigungsart weist die Führungshülse einteilig mit der Führungshülse ausgebildete Zungen mit Hinterschnitten auf, die bei Montage der Führungshülse in der Gehäusebohrung in korrespondierende Ausnehmungen im Gehäuse einrasten, um die Führungshülse fest mit dem Gehäuse zu verbinden. Die Zungen bzw. die Ausnehmungen sind bei dieser Befestigungsart derart zu dimensionieren, daß die Schnappverbindung die bei Anschlagen des Druckbolzenkopfes an der Führungshülse auftretenden Mißbrauchskräfte in gleichem Umfang wie die oben beschriebene ultraschallverschweißte Verbindung sicher aufnehmen kann.

Schließlich könnte die Führungshülse auch in der Gehäusebohrung eingeklebt werden, um die Führungshülse fest mit dem Gehäuse zu verbinden. Die fertigungstechnisch günstigste Befestigungsart ist allerdings im Ultraschallverschweißen der wie in Fig. 2 dargestellt ausgebildeten Führungshülse 8 mit dem Gehäuse 4 zu sehen, da diese Führungshülse eine einfache Form aufweist, keine zusätzlichen Teile erforderlich sind und auch die Montage der Führungshülse 8 am Gehäuse 4 ohne zusätzliche Montageschritte, wie Aufbringen eines Klebstoffs oder dergleichen, ausgeführt werden kann.

In Fig. 3 ist das in Fig. 1 vom Druckraum 28 abgewandte Ende des Druckbolzens 10 dargestellt, an dem der Druckbolzenkopf 12 angebracht ist. Der Druckbolzenkopf 12 weist einen zylindrischen Abschnitt 84 auf, der am von dem Druckraum 28 abgewandten Ende des Druckbolzenkopfes 12 in das planparallel abgeflachte Befestigungsauge 58 übergeht. Der zylindrische Abschnitt 84 hat an dem dem Druckraum 28 zugewandten Ende einen Bund 86, der die Ringfläche 62 zur Arbeitshubbegrenzung der Kolbeneinheit 6 ausbildet, und ist vom Bund 86 ausgehend mit einer zentrischen Öffnung in Form eines Sacklochs 88 versehen, das zur Aufnahme des vom Druckraum 28 abgewandten Ende des Druckbolzens 10 dient. Das Sackloch 88 weist in seinem Grund eine Entlüftungsbohrung (nicht dargestellt) auf, über die in dem Sackloch 88 befindliche Luft beim Fügen des Druckbolzenkopfes 12 auf den Druckbolzen 10 entweichen kann. Anstelle des Sacklochs 88 kann der Druckbolzenkopf 12 auch mit einer Stufenbohrung (nicht dargestellt) als Aufnahmebohrung für den Druckbolzen 10 versehen sein, die von der Ringfläche 62 des Bundes 86 ausgehend im Durchmesser verjüngt in der Durchgangsbohrung 60 des Befestigungsauges 58 endet.

Das vom Druckraum 28 abgewandte Ende des Druckbolzens 10 ist an seinem Umfang mit einem Rändelprofilabschnitt 90 oder einem Abschnitt mit vergleichbarem Profil versehen, der der Befestigung des Druckbolzenkopfes 12 am Druckbolzen 10 dient. Schließlich weist der Druckbolzen 10 zwischen seinem im montierten Zustand von dem Schaftteil 40 der Kolbeneinheit 6 umgebenen Abschnitt und dem Rändelprofilabschnitt 90 eine Nut 92 auf, die bei Montage des Betätigungszylinders 2 der vorübergehenden axialen Fixierung des Druckbolzens 10 dient.

Zur Befestigung des vorzugsweise aus Kunststoff bestehenden Druckbolzenkopfes 12 am metallischen Druckbolzen 10 findet vorzugsweise ein Warmeinbettverfahren Anwendung. Bei diesem Verfahren wird der Druckbolzen 10 beispielsweise induktiv erwärmt und gleichzeitig in das Sackloch 88 des Druckbolzenkopfes 12 hineingedrückt, wobei die Innenumfangsfläche des Sacklochs 88 örtlich aufgeschmolzen wird, so daß zwischen dem zylindrischen Abschnitt 84 des Druckbolzenkopfes 12 und dem Rändelprofilabschnitt 90 des Druckbolzens 10 eine im wesentlichen formschlüssige Verbindung entsteht, die eine im Hinblick auf die auftretenden Betätigungskräfte ausreichende Zug- und Druckfestigkeit aufweist. Die Zug- und Druckfestigkeit dieser Verbindung kann dadurch erhöht werden, daß ein Druckbolzen 10 vorgesehen wird, bei dem die Querschnittsfläche des im zylindrischen Abschnitt 84 des Druckbolzenkopfes 12 eingebetteten Abschnitts örtlich vergrößert ist, beispielsweise durch eine Stufung des Durchmessers des Druckbolzens 10 im Bereich des Rändelprofilabschnitts 90.

Auch ist es möglich, den Druckbolzenkopf am Druckbolzen mittels eines Ultraschallschweißverfahrens zu befestigen. Dazu werden nach Aufschieben des Druckbolzenkopfes auf den Druckbolzen Ultraschallwellen in den zylindrischen Abschnitt des Druckbolzenkopfes eingeschallt, die die Innenumfangsfläche des Sacklochs im Druckbolzenkopf örtlich aufschmelzen, so daß es zu einer im wesentlichen formschlüssigen Verbindung zwischen dem zylindrischen Abschnitt des Druckbolzenkopfes und dem Rändelprofilabschnitt des Druckbolzens kommt. Handelt es sich bei dem Druckbolzen allerdings um ein oberflächenbeschichtetes Metallteil, ist das oben beschriebene Warmeinbetten zu bevorzugen, da sich die Oberflächenschichten beim Einschallen von Ultraschallwellen vom Druckbolzen ablösen und die Verbindung zwischen Druckbolzen und Druckbolzenkopf beeinträchtigen können.

Schließlich besteht eine weitere Verbindungsmöglichkeit darin, den Druckbolzenkopf aus Metall zu fertigen und dessen zylindrischen Abschnitt mit dem vom Druckraum abgewandten Ende des Druckbolzens zu verkrimpen. Dem oben beschriebenen Warmeinbetten ist aber auch hier der Vorzug zu geben, da die Herstellung eines Druckbolzenkopfes aus Metall aufwendig ist und das Verkrimpen von Metallteilen einen höheren vorrichtungstechnischen Aufwand erfordert.

Gemein ist allen beschriebenen Verbindungsmöglichkeiten allerdings der Vorteil, daß zum Anschluß des Druckbolzenkopfes 12 an den Druckbolzen 10 durch plastische Verformung des Druckbolzenkopfes 12 keine weiteren Bauteile benötigt werden.

Der Durchmesser des Bundes 86 des Druckbolzenkopfes 12 und somit der Ringfläche 62 des Druckbolzenkopfes 12 sowie der Durchmesser und die Wandstärke des inneren Ringabschnitts 68 der Führungshülse 8 und somit die Größe der Anschlagfläche 64 der Führungshülse 8 sind konstruktiv dergestalt aufeinander abgestimmt, daß der Druckbolzenkopf 12 mit der Ringfläche 62 zur flächigen Anlage an der Anschlagfläche 64 der Führungshülse 8 kommen kann, ohne daß der Druckbolzenkopf 12 mit dem äußeren Ringabschnitt 66 der Führungshülse 8 interferiert.

Der Betrieb des Betätigungszylinders 2 unterscheidet sich vom Betrieb eines herkömmlichen Betätigungszylinders nur insoweit, als die fest mit dem Gehäuse 4 verbundene Führungshülse 8 einen Anschlag sowohl in der Zugphase als auch in der Druckphase des Betätigungszylinders 2 ausbildet.

Bei Verschieben der Kolbeneinheit 6 durch Niederdrücken des Druckbolzenkopfes 12 in Richtung des Druckraums 28, d.h. nach links in Fig. 1, begrenzt die Führungshülse 8 den Arbeitshub H der Kolbeneinheit 6, da der Druckbolzenkopf 12 mit seiner am Bund 86 ausgebildeten Ringfläche 62 an der Anschlagfläche 64 des inneren Ringabschnitts 68 der Führungshülse 8 anschlägt. Die überschüssigen Betätigungskräfte bzw. Mißbrauchskräfte werden dann vom Druckbolzenkopf 12 über dessen Ringfläche 62, die Anschlagfläche 64 der Führungshülse 8, deren inneren Ringabschnitt 68, den Steg 70 bzw. die Längsrippen 72, den äußeren Ringabschnitt 66, den Bund 74 und die Stirnfläche 76 sowie über die stoffschlüssige Verbindung zwischen der Außenumfangsfläche des äußeren Ringabschnitts 66 und der Innenumfangsfläche der Gehäusebohrung 14 in das Gehäuse 4 eingeleitet, so daß die Kolbeneinheit 6 nicht mit den Mißbrauchskräften beaufschlagt wird.

Bei Bewegen der Kolbeneinheit 6 nach rechts in Fig. 1, d.h. in der Zugphase des Betätigungszylinders 2, schlägt die Kolbeneinheit 6 mit ihrem Kolbenkopf 34 an der radial inneren ringförmigen Stirnfläche der Stützscheibe 26 an, die sich an der Schulter 80 in der Ausnehmung 78 der Führungshülse 8 abstützt. Die überschüssigen Kräfte in der Zugphase des Betätigungszylinders 2, deren Betrag deutlich geringer ist als der Betrag der Mißbrauchskräfte in der Druckphase des Betätigungszylinders 2, werden von dem Kolbenkopf 34 der Kolbeneinheit 6 über die Stützscheibe 26, die Schulter 80 der Führungshülse 8, deren äußeren Ringabschnitt 66 und die stoffschlüssige Verbindung zwischen der Außenumfangsfläche des äußeren Ringabschnitts 66 und der Innenumfangsfläche der Gehäusebohrung 14 in das Gehäuse 4 eingeleitet.

Im folgenden wird die Montage des oben beschriebenen Betätigungszylinders 2 erläutert, bei der auch der Arbeitshub H der Kolbeneinheit 6 eingestellt wird.

Zunächst wird das Gehäuse 4 mittels den daran angeformten Befestigungsaugen 16 für den Montagevorgang an einer Montagevorrichtung fixiert. Dann wird die vormontierte Kolbeneinheit 6, an der der Druckbolzen 10 über die Kugelschnapphaken 52 und das Kugelteil 54 befestigt ist, in die Gehäusebohrung 14 des Gehäuses 4 hineingeschoben. Der Druckbolzenkopf 12 ist zu diesem Zeitpunkt noch nicht am Druckbolzen 10 angebracht. Nun wird die bereits am Schaftteil 40 der Kolbeneinheit 6 positionierte Führungshülse 8, in deren Ausnehmung 78 sowohl die Stützscheibe 26 als auch das Dichtelement 56 angeordnet sind, so weit in die Gehäusebohrung 14 hineingeschoben, bis die Stirnfläche 76 des Bundes 74 am äußeren Ringabschnitt 66 der Führungshülse 8 bündig an der von dem Druckraum 28 abgewandten Stirnfläche des Gehäuses 4 anliegt. Anschließend wird die Außenumfangsfläche des äußeren Ringabschnitts 66 der Führungshülse 8 wie oben beschrieben mit der Innenumfangsfläche der Gehäusebohrung 14 ultraschallverschweißt, wozu eine in der Montagevorrichtung integrierte Ultraschalleinrichtung verwendet wird.

Ist zur Befestigung der Führungshülse eine Schnappverbindung vorgesehen, so wird die Führungshülse bereits beim Einschieben der Führungshülse in die Gehäusebohrung am Gehäuse befestigt, indem die Zungen der Führungshülse in den korrespondierenden Ausnehmungen im Gehäuse einrasten.

Im nächsten Montageschritt wird die Kolbeneinheit 6 über das Schaftteil 40 oder den Druckbolzen 10 so weit in Richtung der Führungshülse 8 gezogen, bis die Kolbeneinheit 6 mit ihrem Kolbenkopf 34 an der radial inneren ringförmigen Stirnfläche der Stützscheibe 26 anschlägt, die sich an der Schulter 80 in der Ausnehmung 78 der Führungshülse 8 abstützt. Zwischen dem von dem Druckraum 28 abgewandten Ende des Schaftteils 40 der Kolbeneinheit 6 und dem Rändelprofilabschnitt 90 des Druckbolzens 10 wird der Druckbolzen 10 an der Nut 92 in axialer Richtung bezüglich des Gehäuses 4 vorübergehend fixiert.

Nun wird der Druckbolzenkopf 12 auf das mit dem Rändelprofilabschnitt 90 versehene Ende des Druckbolzens 10 in axialer Richtung des Druckbolzens 10 aufgeschoben, wobei der Rändelprofilabschnitt 90 des Druckbolzens 10 in das Sackloch 88 des Druckbolzenkopfes 12 eintaucht. Gleichzeitig wird der Arbeitshub H der Kolbeneinheit 6 zwischen der Ringfläche 62 des Druckbolzenkopfes 12 und der Anschlagfläche 64 der Führungshülse 8 eingestellt.

Alternativ dazu kann als Bezugsmaß für den Arbeitshub H der Kolbeneinheit 6 auch der Abstand zwischen einer anderen vorbestimmten Stelle des Gehäuses 4 und einer anderen vorbestimmten Stelle des Druckbolzenkopfes 12 dienen, beispielsweise der in Fig. 1 mit dem Bezugszeichen H1 bezeichnete horizontale Abstand zwischen dem Zentrum der Durchgangsbohrung 60 im Druckbolzenkopf 12 und dem Zentrum des Befestigungsauges 16 am Gehäuse 4 oder etwa der Anschlagfläche eines zur Befestigung des Betätigungszylinders 2 im Kraftfahrzeug dienenden Flansches (nicht dargestellt) des Gehäuses 4. Gerade das beispielhaft genannte Bezugsmaß H1 zwischen der Stelle, an der das Kupplungspedal an den Betätigungszylinder 2 angeschlossen wird, und einer Befestigungsstelle des Gehäuses 4 im Kraftfahrzeug kann vorteilhaft verwendet werden, wenn der Hub der Kolbeneinheit 6 durch Anschlag des Kupplungspedals am Pedalbock begrenzt werden soll. In diesem Fall ist natürlich durch entsprechende Dimensionierung des Bezugsmaßes H1 dafür Sorge zu tragen, daß die Ringfläche 62 des Kolbenkopfes 12 nicht auf die Anschlagfläche 64 der Führungshülse 8 auffahren kann, sondern die Hubbegrenzung der Kolbeneinheit 6 vorher durch Anschlag des Kupplungspedals am Pedalbock erfolgt.

Bei Einstellung des Arbeitshubs H der Kolbeneinheit 6 ist das vom Druckraum 28 abgewandte Ende des Druckbolzens 10 vom Grund des Sacklochs 88 beabstandet. Durch geeignete Stufung des Durchmessers und der Tiefe des Sacklochs 88 im zylindrischen Abschnitt 84 des Druckbolzenkopfes 12 ist es möglich, ein Baukastensystem für verschiedene Betätigungszylinder mit unterschiedlichen Druckbolzendurchmessern bzw. Arbeitshüben zu erstellen.

Schließlich wird der Druckbolzenkopf 12 fest mit dem Druckbolzen 10 verbunden. Dazu wird beim dargestellten Ausführungsbeispiel der Rändelprofilabschnitt 90 des Druckbolzens 10 in der Innenumfangsfläche des Sacklochs 88 warmeingebettet, wozu der Druckbolzen 10 bereits beim Aufschieben des Druckbolzenkopfes 12 erwärmt und die Wärmezufuhr nach Einstellen des Arbeitshubs H unterbrochen wird, so daß der Druckbolzenkopf 12 im wesentlichen formschlüssig und unlösbar mit dem Druckbolzen 10 verbunden ist.

## Patentansprüche

1. Betätigungszylinder (2), insbesondere für hydraulische Kupplungsbetätigungen in Kraftfahrzeugen, mit einer in einem Gehäuse (4) angeordneten Kolbeneinheit (6), die über eine fest mit dem Gehäuse (4) verbundene Führungshülse (8) geführt und mittels eines Druckbolzens (10) verschiebbar ist, **dadurch gekennzeichnet, daß** unmittelbar an dem Druckbolzen (10) ein Druckbolzenkopf (12) unter plastischer Verformung unlösbar angebracht ist, über dessen Relativlage bezüglich des Druckbolzens (10) der Arbeitshub (H) der Kolbeneinheit (6) festgelegt ist.

2. Betätigungszylinder (2) nach Anspruch 1, dadurch gekennzeichnet, daß der Druckbolzenkopf (12) eine Öffnung (88) zur Aufnahme des von der Kolbeneinheit (6) abgewandten Endes des Druckbolzens (10) hat, wobei der Arbeitshub (H) der Kolbeneinheit (6) über die Einbettungstiefe des Druckbolzens (10) in der Öffnung (88) bei Montage des Betätigungszylinders (2) variabel einstellbar ist.

3. Betätigungszylinder (2) nach Anspruch 1 oder 2, dadurch gekennzeichnet, daß der Druckbolzenkopf (12) aus einem Kunststoff besteht, während der Druckbolzen (10) aus Metall besteht und an seinem in der Öffnung (88) des Druckbolzenkopfes (12) aufgenommenen Ende einen profilierten Abschnitt (90) hat, der in der Öffnung (88) des Druckbolzenkopfes (12) mittels Warmeinbetten befestigt ist.

4. Betätigungszylinder (2) nach Anspruch 3, dadurch gekennzeichnet, daß der profilierte Abschnitt (90) des Druckbolzens (10) ein Rändelprofil aufweist.

5. Betätigungszylinder (2) nach einem der vorhergehenden Ansprüche, dadurch gekennzeichnet, daß der Druckbolzenkopf (12) an seinem von der Kolbeneinheit (6) abgewandten Ende ein Befestigungsauge (58) aufweist, welches der Einleitung von Kräften zur Betätigung des Betätigungszylinders (2) dient.

6. Betätigungszylinder (2) nach einem der Ansprüche 1 bis 4, dadurch gekennzeichnet, daß der Druckbolzenkopf (12) an seinem von der Kolbeneinheit (6) abgewandten Ende im wesentlichen kugelförmig ist, um mit einer betätigungsseitig angeordneten, im wesentlichen komplementär geformten Aufnahme eine Schnappverbindung auszubilden, welche der Einleitung von Kräften zur Betätigung des Betätigungszylinders (2) dient.

7. Betätigungszylinder (2) nach einem der vorhergehenden Ansprüche, dadurch gekennzeichnet, daß die Führungshülse (8) auf ihrer von der Kolbeneinheit (6) abgewandten Seite eine ringförmige Anschlagfläche (64) aufweist, die mit einer Ringfläche (62) des Druckbolzenkopfes (12), die auf der der Kolbeneinheit (6) zugewandten Seite des Druckbolzenkopfes (12) ausgebildet ist, zur Anlage bringbar ist, um den Arbeitshub (H) der Kolbeneinheit (6) zu begrenzen.

8. Betätigungszylinder (2) nach Anspruch 7, dadurch gekennzeichnet, daß die Führungshülse (8) einen inneren Ringabschnitt (68), der die Kolbeneinheit (6) führt und an dem die Anschlagfläche (64) ausgebildet ist, sowie einen äußeren Ringabschnitt (66) aufweist, der mit dem Gehäuse (4) verbunden ist, wobei der innere Ringabschnitt (68) mit dem äußeren Ringabschnitt (66) über einen Steg (70) und eine Mehrzahl von Längsrippen (72) verbunden ist.

9. Betätigungszylinder (2) nach einem der vorhergehenden Ansprüche, dadurch gekennzeichnet, daß das Gehäuse (4) und die Führungshülse (8) aus einem ultraschallverschweißbaren Kunststoff bestehen und miteinander ultraschallverschweißt sind.

10. Betätigungszylinder (2) nach einem der Ansprüche 1 bis 8, dadurch gekennzeichnet, daß die Führungshülse (8) mit dem Gehäuse (4) mittels einer Schnappverbindung verbunden ist.

11. Verfahren zur Montage eines Betätigungszylinders (2) nach einem der vorhergehenden Ansprüche, mit den folgenden Schritten:
(a) Einschieben der vormontierten Kolbeneinheit (6) sowie der Führungshülse (8) ohne Druckbolzenkopf (12) in das Gehäuse (4) und Befestigen der Führungshülse (8) an dem Gehäuse (4), sodann
(b) Verschieben der Kolbeneinheit (6) bis auf Anschlag in Richtung der Führungshülse (8) und Fixieren des Druckbolzens (10) bezüglich des Gehäuses (4),
(c) Aufschieben des Druckbolzenkopfes (12) auf den Druckbolzen (10) bei gleichzeitigem Einstellen des Arbeitshubs (H) der Kolbeneinheit (6) und
(d) Befestigen des Druckbolzenkopfes (12) an dem Druckbolzen (10), wobei der Druckbolzenkopf (12) plastisch verformt wird.

12. Verfahren nach Anspruch 11, wobei der Arbeitshub (H) der Kolbeneinheit (6) zwischen der Führungshülse (8) und dem Druckbolzenkopf (12) eingestellt wird.

13. Verfahren nach Anspruch 12, wobei der Arbeitshub (H) der Kolbeneinheit (6) zwischen der ringförmigen Anschlagfläche (64) auf der von der Kolbeneinheit (6) abgewandten Seite der Führungshülse (8) und der Ringfläche (62) auf der der Kolbeneinheit (6) zugewandten Seite des Druckbolzenkopfes (12) eingestellt wird.

14. Verfahren nach Anspruch 11, wobei der Arbeitshub der Kolbeneinheit (6) mittels eines Bezugsmaßes (H1) zwischen einer Stelle (60) des Druckbolzenkopfes (12), die der Einleitung von Betätigungskräften dient, und einer Befestigungsstelle (16) des Gehäuses (4) eingestellt wird.

15. Verfahren nach einem der Ansprüche 11 bis 14, wobei der aus Kunststoff bestehende Druckbolzenkopf (12) an dem metallischen Druckbolzen (10) durch Warmeinbetten des profilierten Abschnitts (90) des Druckbolzens (10) in der Öffnung (88) des Druckbolzenkopfes (12) befestigt wird.

16. Verfahren nach einem der Ansprüche 11 bis 15, wobei die Führungshülse (8) durch Ultraschallverschweißen an dem Gehäuse (4) befestigt wird.

17. Verfahren nach einem der Ansprüche 11 bis 15, wobei die Führungshülse (8) mit dem Gehäuse (4) verrastet wird, um die Führungshülse (8) an dem Gehäuse (4) zu befestigen.

## Claims

1. Actuating cylinder (2), especially for hydraulic clutch operation in motor vehicles, with a piston unit (6) arranged in a housing (4) and guided via a guide sleeve (8) permanently connected to the housing (4), the piston unit being displaceable by means of a thrust bolt (10), **characterised in that** a thrust bolt head (12) is attached directly and in a permanent manner to the thrust bolt (10) by means of plastic deformation such that the working stroke (H) of the piston unit (6) is defined by the relative position of the thrust bolt head in relation to the thrust bolt (10).

2. Actuating cylinder (2) according to Claim 1, characterised in that the thrust bolt head (12) has an orifice (88) to accommodate the end of the thrust bolt (10) facing away from the piston unit (6), wherein the working stroke (H) of the piston unit (6) can be adjusted variably by the depth to which the thrust bolt (10) is embedded in the orifice (88) at the time of assembly of the actuating cylinder (2).

3. Actuating cylinder (2) according to Claim 1 or 2, characterised in that the thrust bolt head (12) is made of plastic, while the thrust bolt (10) is made of metal and has a profiled section (90) on its end that is accommodated in the orifice (88) of the thrust bolt head (12), the profiled section being secured by heat embedding in the orifice (88) of the thrust bolt head (12).

4. Actuating cylinder (2) according to Claim 3, characterised in that the profiled section (90) of the thrust bolt (10) has a knurled profile.

5. Actuating cylinder (2) according to one of the preceding claims, characterised in that the thrust bolt head (12) has a fastening eye (58) on the end facing away from the piston unit (6), the fastening eye serving to introduce forces for operating the actuating cylinder (2).

6. Actuating cylinder (2) according to one of Claims 1 to 4, characterised in that the thrust bolt head (12) is essentially ball-shaped on the end that faces away from the piston unit (6) so as to form a snap-type connection with a receptacle of an essentially complementary shape on the actuating side, this snap-type connection serving to introduce forces for operating the actuating cylinder (2).

7. Actuating cylinder (2) according to one of the preceding claims, characterised in that the guide sleeve (8) has a ring-shaped stop face (64) on the side facing away from the piston unit (6), wherein the stop face can be brought to a stop with a ring face (62) of the thrust bolt head (12) on the side of the thrust bolt head (12) facing towards the piston unit (6) so as to limit the working stroke (H) of the piston unit.

8. Actuating cylinder (2) according to Claim 7, characterised in that the guide sleeve (8) has an inner ring section (68) that guides the piston unit (6) and has the stop face (64) as well as an outer ring section (66) connected to the housing (4), wherein the inner ring section (68) is connected to the outer ring section (66) by a web (70) and several longitudinal ribs (72).

9. Actuating cylinder (2) according to one of the preceding claims, characterised in that the housing (4) and the guide sleeve (8) are made of an ultrasonically weldable plastic and they are welded together by ultrasonic welding.

10. Actuating cylinder (2) according to one of Claims 1 to 8, characterised in that the guide sleeve (8) is connected to the housing (4) by means of a snap-type connection.

11. Method for assembling an actuating cylinder (2) according to one of the preceding claims, including the following steps:
(a) inserting the preassembled piston unit (6) and the guide sleeve (8) without thrust bolt head (12) into the housing (4) and attaching the guide sleeve (8) to the housing (4), then
(b) shifting the piston unit (6) until it comes to a stop in the direction of the guide sleeve (8), and securing the thrust bolt (10) with regard to the housing (4),
(c) sliding the thrust bolt head (12) onto the thrust bolt (10) while at the same time adjusting the working stroke (H) of the piston unit (6) and
(d) attaching the thrust bolt head (12) to the thrust bolt (10), whereby the thrust bolt head (12) is plastically deformed.

12. Method according to Claim 11, wherein the working stroke (H) of the piston unit (6) is adjusted between the guide sleeve (8) and the thrust bolt head (12).

13. Method according to Claim 12, wherein the working stroke (H) of the piston unit (6) is adjusted between the ring-shaped stop face (64) on the side of the guide sleeve (8) facing away from the piston unit (6) and the ring face (62) on the side of the thrust bolt head (12) facing towards the piston unit (6).

14. Method according to Claim 11, wherein the working stroke of the piston unit (6) is adjusted by means of a reference dimension (H1) between a position (60) on the thrust bolt head (12) that serves to introduce the actuating forces and a fastening point (16) on the housing (4).

15. Method according to one of Claims 11 to 14, wherein the thrust bolt head (12) which is made of plastic is attached to the metallic thrust bolt (10) by hot embedding of the profiled section (90) of the thrust bolt (10) in the orifice (88) of the thrust bolt head (12).

16. Method according to one of Claims 11 to 15, wherein the guide sleeve (8) is attached to the housing (4) by ultrasonic welding.

17. Method according to one of Claims 11 to 15, wherein the guide sleeve (8) is locked to the housing (4) to attach the guide sleeve (8) to the housing (4).

## Revendications

1. Cylindre de commande (2), en particulier pour des commandes d'embrayages hydrauliques dans des véhicules automobiles, comportant une unité formant piston (6) qui est disposée dans une enveloppe (4), qui est guidée par l'intermédiaire d'une douille de guidage (8) solidaire de l'enveloppe (4) et qui est mobile grâce à une tige de pression (10), **caractérisé** en ce qu'on prévoit directement sur la tige de pression (10) une tête de tige de pression (12) qui est installée à demeure avec une déformation plastique et dont la position relative par rapport à la tige de pression (10) détermine la course de travail (H) de l'unité de piston (6).

2. Cylindre de commande (2) selon la revendication 1, caractérisé en ce que la tête de tige de pression (12) a une ouverture (88) pour recevoir l'extrémité de la tige de pression (10) opposée à l'unité formant piston (6), la course de travail (H) de cette dernière étant réglable de façon variable lors du montage du cylindre de commande (2) par l'intermédiaire de la profondeur d'encastrement de la tige de pression (10) dans l'ouverture (88).

3. Cylindre de commande (2) selon la revendication 1 ou 2, caractérisé en ce que la tête de tige de pression (12) est en matière plastique tandis que la tige de pression (10) est en métal et présente à son extrémité logée dans l'ouverture (88) de la tête (12) une section profilée (90) qui est fixée par encastrement à chaud dans l'ouverture (88) de ladite tête (12).

4. Cylindre de commande (2) selon la revendication 3, caractérisé en ce que la section profilée (90) de la tige de pression (10) présente un profil moleté.

5. Cylindre de commande (2) selon l'une des revendications précédentes, caractérisé en ce que la tête de tige de pression (12) présente à son extrémité opposée à l'unité formant piston (6) un oeil de fixation (58) qui sert à l'introduction de forces pour la commande du cylindre de commande (2).

6. Cylindre de commande (2) selon l'une des revendications 1 à 4, caractérisé en ce que la tête de tige de pression (12) est globalement sphérique, à son extrémité opposée à l'unité formant piston (6), afin de former avec un logement disposé côté commande et de forme globalement complémentaire une liaison à enclenchement qui sert à l'introduction de forces pour l'actionnement du cylindre de commande (2).

7. Cylindre de commande (2) selon l'une des revendications précédentes, caractérisé en ce que la douille de guidage (8) présente sur son côté opposé à l'unité formant piston (6) une surface de butée annulaire (64) apte à être amenée contre une surface annulaire (62) de la tête de tige de pression (12) qui est formée sur le côté de ladite tête (12) tourné vers l'unité formant piston (6), afin de limiter la course de travail (H) de l'unité formant piston (6).

8. Cylindre de commande (2) selon la revendication 7, caractérisé en ce que la douille de guidage (8) comporte une section annulaire intérieure (68) qui guide l'unité formant piston (6) et sur laquelle est formée sur la surface de butée (64), et une section annulaire extérieure (66) qui est reliée à l'enveloppe (4), la section annulaire intérieure (68) étant reliée à la section annulaire extérieure (66) par une patte (70) et plusieurs nervures longitudinales (72).

9. Cylindre de commande (2) selon l'une des revendications précédentes, caractérisé en ce que l'enveloppe (4) et la douille de guidage (8) se composent d'une matière plastique apte à être soudée par ultrasons et sont soudés ensemble par ultrasons.

10. Cylindre de commande (2) selon l'une des revendications 1 à 8, caractérisé en ce que la douille de guidage (8) est reliée à l'enveloppe (4) grâce à une liaison à enclenchement.

11. Procédé pour le montage d'un cylindre de commande (2) selon l'une des revendications précédentes, consistant :
(a) à introduire l'unité formant piston (6) montée préalablement, et la douille de guidage (8) sans la tête de tige de pression (12) dans l'enveloppe (4), et à fixer la douille de guidage (8) à l'enveloppe (4), puis
(b) à déplacer l'unité formant piston (6) jusqu'à la butée, en direction de la douille de guidage (8), et à fixer la tige de pression (10) par rapport à l'enveloppe (4),
(c) à enfiler la tête de tige de pression (12) sur la tige de pression (10), en réglant en même temps la course de travail (H) de l'unité formant piston (6), et
(d) à fixer la tête de tige de pression (12) à la tige de pression (10), la tête (12) subissant une déformation plastique.

12. Procédé selon la revendication 11, selon lequel la course de travail (H) de l'unité formant piston (6) est réglée entre la douille de guidage (8) et la tête de tige de pression (12).

13. Procédé selon la revendication 12, selon lequel la course de travail (H) de l'unité formant piston (6) est réglée entre la surface de butée annulaire (64) située sur le côté de la douille de guidage (8) opposé à l'unité formant piston (6), et la surface annulaire (62) située sur le côté de la tête de tige de pression (12) tourné vers l'unité formant piston (6).

14. Procédé selon la revendication 11, selon lequel la course de travail de l'unité formant piston (6) est réglée à l'aide d'une valeur de référence (H1) entre un point (60) de la tête de tige de pression (12) qui sert à l'introduction de forces de commande, et un point de fixation (16) de l'enveloppe (4).

15. Procédé selon l'une des revendications 11 à 14, selon lequel la tête de tige de pression en matière plastique (12) est fixée à la tige de pression métallique (10) par encastrement à chaud de la section profilée (90) de la tige de pression (10) dans l'ouverture (88) de la tête (12).

16. Procédé selon l'une des revendications 11 à 15, selon lequel la douille de guidage (8) est fixée à l'enveloppe (4) par ultrasons.

17. Procédé selon l'une des revendications 11 à 15, selon lequel on enclenche la douille de guidage (8) avec l'enveloppe (4) afin de la fixer à celle-ci.
